# EUROPÄISCHE PATENTSCHRIFT

(11) **EP 2 345 856 B1**
(45) Veröffentlichungstag und Bekanntmachung des Hinweises auf die Patenterteilung: **02.08.2023**
(21) Anmeldenummer: 10015513.4
(22) Anmeldetag: 10.12.2010
(51) Int. Cl.: F24F 12/00, F25B 30/00, F24F 13/20

(54) **Luft/Wasser-Wärmepumpe**
Air/water heat pump
Pompe à chaleur air/eau

(30) Priorität: 10.12.2009 DE 102009057481
(43) Veröffentlichungstag der Anmeldung: 20.07.2011
(73) Patentinhaber: Stiebel Eltron GmbH & Co. KG, 37603 Holzminden (DE)
(72) Erfinder: Schiefelbein, Kai, Dr., 37671 Höxter (DE); Brugmann, Johannes, Dr., 37671 Höxter (DE); Schaumlöffel, Michael, 37671 Höxterq (DE); Smollich, Steffen, 37603 Holzminden (DE)

(56) Entgegenhaltungen:
- EP-A1- 0 066 364
- EP-A1- 1 741 993
- DE-A1- 3 118 053
- DE-A1- 10 326 912
- DE-U1- 29 712 751
- DE-U1-202009 004 141

## Beschreibung

Die Erfindung betrifft eine Luft/Wasser-Wärmepumpe für die Aufstellung in einem Gebäude, in dem ein zumindest teilweise durch eine Wand gebildeter Luftweg von einer Luftansaugöffnung zu einer Fortgasöffnung führt, mit einem im Luftweg befindlichen Raum, in dem ein Ventilator angeordnet ist, der Gas zu einem Wärmetauscher fördert.

Außenluft-führende Haustechnikgeräte, insbesondere Luft/Wasser-Wärmepumpen zur Beheizung von Wohngebäuden, werden als Geräte zur Außen- und zur Innenaufstellung angeboten. Moderne Gebäude werden möglichst luftdicht ausgeführt, mit einer durch Undichtigkeiten in der Gebäudehülle bedingten Luftwechselrate. Im Bereich von Undichtigkeiten des Gehäuses des Außenluft-führenden Haustechnikgeräts kann es zu Kondensat- oder Eisbildung kommen. Beides kann Feuchtigkeitsschäden hervorrufen. Luft/Wasser-Wärmepumpen weisen zur Verhinderung von Feuchtigkeitsschäden eine Abtauwanne insbesondere im Bereich des Verdampfers auf, in der Feuchtigkeit gesammelt werden kann.

Gemäß EP 1 870 643 A2 ist eine Heizvorrichtung mit einer ersten und einer zweiten Wärmepumpe bekannt. Wahlweise wird die erste oder die zweite Wärmepumpe angesteuert. Die erste und zweite Wärmepumpe sind vorzugsweise in einem nach außen abgeschlossenen, wärmegedämmten Gehäuse angeordnet, das vorzugsweise luftdicht ist. Durch verschiedene Bereiche strömt Luft durch einen Wärmetauscher und einen Verdampfer sowie Kondensatoren. Diese Bereiche sind vorzugsweise zueinander isoliert, und nur über den Wärmetauscher sind die Kondensatoren und der Verdampfer miteinander verbunden.

Bei einer Wärmepumpe 100 gemäß DE 20 2008 000 950 U1 sind diejenigen Komponenten, an welchen im Betrieb der Wärmepumpe Wasser kondensieren kann, zumindest teilweise thermisch isoliert. Zumindest stehen die aneinandergrenzenden Wärmedämmungen in so engem Kontakt, dass diese luftdicht aufeinanderstoßen.

Die DE 297 12 751 U1 betrifft eine Rahmenkonstruktion für eine Kammer vorzugsweise eine Ansaugkammer (6) einer Klimaanlage, wobei sich ein Temperaturgradient zwischen der Umgebungstemperatur (T₀) und der Kammertemperatur (T₁) einstellt, mit einem Tragrahmen (26) mit einem Kern (28), der mit einem Mantel (30) umgeben ist, dessen Wärmeleitfähigkeit größer ist als die diejenige des Kerns (28), dadurch gekennzeichnet, daß zumindest in in den späteren Trennfugen (16) zwischen Tragrahmen (26) und einer Beplankung (14') liegenden Innenstirnflächen (36, 38) Schichten (46a) aus einem thermisch schlecht leitenden Material münden.

Dokument EP 0 066 364 A1 offenbart eine Luft/Wasser Wärmepumpe mit den Merkmalen des Oberbegriffs von Anspruch 1.

Aufgabe der Erfindung ist es, eine Luft/Wasser-Wärmepumpe, für eine Aufstellung in einem Gebäude bereitzustellen, welches dazu beiträgt, Energieverluste und Feuchtigkeitsschäden insbesondere des Gebäudes zu verhindern, wobei eine einfache, preiswerte, zuverlässige und für die Fertigung prozesssichere Herstellung des Außenluft-führenden Haustechnikgeräts möglich ist.

Gelöst ist die Aufgabe durch die Merkmale des Anspruchs 1.

Ein Brennstoffzellenheizgerät (BZH) bzw. ein Lüftungsgerät fallen nicht unter den Schutzbereich der Ansprüche.

Ein in einem Gebäude aufgestelltes Außenluft-führendes Haustechnikgerät, nämlich eine Wärmepumpe, ein Lüftungsgerät oder ein Brennstoffzellenheizgerät (BZH) ist dazu insbesondere im Bereich des Luftweges, vorzugsweise auf einer Ansaugseite oder einer Ausblasseite gegenüber dem Aufstellraum mit einer Schicht, insbesondere einer Folie abgedichtet. Im Luftweg ist ein erster Wärmeaustauscher, insbesondere im Heizbetrieb einer Luft/Wasser-Wärmepumpe ein Kältemittelverdampfer, und im Kühlbetrieb ein Kältemittelverflüssiger, bei einem BZH ein Brennstoffzellenstack und Wärmetauscher, oder bei einem Lüftungsgerät ein Luft/Luft-Wärmetauscher angeordnet. Der Luftweg bei einer Luft/Wasser-Wärmepumpe weist vorteilhaft eine Wand auf. Die Wand kann in vorteilhafter Weise auch die Wand eines Rohres oder eines anderen Luftkanals sein. Bei einer vorteilhaften Luft/Wasser-Wärmepumpe, bei einem BZH oder einem Lüftungsgerät ist der Luftweg vorteilhaft zumindest teilweise durch Luft- oder Gaskanäle oder Rohre gebildet. Auch flexible Rohre aus Kunststoff oder Metall stellen vorteilhaft zumindest einen Teil des Luftweges dar. Vorteilhaft ist zumindest eine Abdichtung mit dünnen Schichten um den ersten Wärmeaustauscher herum oder wenigstens auf einer Seite des Ventilators um einen Ventilator. Im Ausführungsbeispiel ist eine Luft/Wasser-Wärmepumpe beschrieben, die Abdichtung erfolgt in gleicher Weise bei einem BZH oder bei einem Lüftungsgerät. Bei luftdicht ausgeführten Gebäuden ist die Luftdichtigkeit der Gebäudehülle durch das innen aufgestellte Außenluft-führende Haustechnikgerät somit aufrecht erhalten. Undichtigkeiten des Gehäuses des Außenluft-führenden Haustechnikgeräts sind weitgehend vermieden, und eine Kondensat- oder Eisbildung kann nicht auftreten. Somit treten insbesondere Feuchtigkeitsschäden im Aufstellraum nicht auf. Es ist vorteilhaft, noch weitere Teile des Außenluft-führenden Haustechnikgeräts luftdicht auszuführen, die sich im Bereich des Unterdrucks, dies ist der Bereich des Luftweges in Strömungsrichtung des Gases (insbesondere Luft) vor dem Ventilator, oder des Überdrucks, dies ist der Bereich des Luftweges in Strömungsrichtung des Gases (insbesondere Luft oder Abgas) hinter dem Ventilator, befinden. Bei einer Luft/Wasser-Wärmepumpe ist somit eine Schicht um die Verdampfer-Ansaugseite oder im Bereich des Überdrucks auf der Ausblasseite angebracht.

Ein weiterer Vorteil der Erfindung besteht darin, dass bei Bedarf die gesamte Luft/Wasser-Wärmepumpe ohne die Verkleidungsteile, und nicht nur der Luftweg abgeklebt wird, um die Dichtigkeit zu verbessern. Diese Ausführung ist später näher beschrieben. Dabei ist die Luftansaugöffnung und die Fortgasöffnung nicht von der Folie verschlossen.

Es ist vorteilhaft noch weitere Teile der Luft/Wasser-Wärmepumpe luftdicht auszuführen, die sich insbesondere im Bereich des Unterdrucks oder des Überdrucks befinden. Bei der Luft/Wasser-Wärmepumpe erfolgt dies auf der Verdampfer-Ansaugseite und/oder im Bereich des Überdrucks auf der Ausblasseite. Ein weiterer Vorteil der Erfindung besteht darin, dass bei Bedarf die gesamte Luft/Wasser-Wärmepumpe, und nicht nur der Luftweg, abgeklebt ist, um die Dichtigkeit zu verbessern. Dabei ist die Luftansaugöffnung und die Fortgasöffnung nicht von der Folie verschlossen.

Eine vorteilhaft ausgestaltete Luft/Wasser-Wärmepumpe wird mittels unterschiedlicher Verkleidungsteile einmal zur innen und einmal zur außen aufgestellten Wärmepumpe komplettiert. Ein Abkleben erfolgt zumindest für Geräte, die für die Innenaufstellung vorgesehen sind. Dennoch kann die Gestell- oder Gehäusekonstruktion für die beiden Varianten nahezu die gleiche sein.

Gemäß der Erfindung ist eine Luft/Wasser-Wärmepumpe für die Aufstellung in einem Gebäude, mit wenigstens teilweise zusätzlich zu einem Verkleidungsteil wie einer Außenwand angebrachten dünnen, flexiblen und weitgehend luftdichten, folienartigen Schicht ausgerüstet, wodurch die Luft/Wasser-Wärmepumpe weitgehend luftdicht zum Gebäude ist. Die Schicht ist vorzugsweise weniger als ca. 3 mm, weiterhin besonders vorteilhaft weniger als 1 mm, insbesondere ca. 0,1 mm dick. In der Luft/Wasser-Wärmepumpe ist ein Luftweg gebildet, der von einer Luftansaugöffnung zu einer Fortgasöffnung führt, wobei sich im Luftweg ein Raum für einen Ventilator befindet, der die Luft durch die Luftansaugöffnung führt. Bei einer Luft/Wasser-Wärmepumpe handelt es sich beim Gas weiterhin um Außenluft, die zu wenigstens einem ersten Wärmetauscher und durch die Fortgasöffnung aus der Wärmepumpe heraus gefördert wird.

Bei einem BZH, das nicht unter den Schutzbereich der Ansprüche fällt, erfolgt das Ansaugen der Außenluft ebenfalls über einen Luftweg, der von einer Luftansaugöffnung und einem Ansaugraum, in dem einen Ventilator sitzt, gebildet ist. Zur Luft wird nun in vorteilhafter Weise ein Brennstoff, insbesondere ein Brenngas hinzugemischt, vorzugsweise in einer Kammer, bei einer unterstöchiometrischen Reaktion reformiert und einem hoch wärmegedämmten Brennstoffzellenstack zugeführt, in dem Strom erzeugt wird. In vorteilhafter Weise erfolgt nach dem Durchströmen des Brennstoffzellenstacks eine Nachverbrennung und vorteilhaft ein Wärmeaustausch in einem ersten Wärmetauscher des BZH, wo die Wärme des Brenngases auf eine Wärmeträgerflüssigkeit übertragen wird. Es wird nun als Gas ein Abgas zur Fortgasöffnung gefördert.

Bei einem Lüftungsgerät, das nicht unter den Schutzbereich der Ansprüche fällt, handelt es sich bei dem ersten Wärmetauscher insbesondere um einen Luft/Luft-Wärmeaustauscher. Das hier behandelte Gas ist Luft.

Gemäß der Erfindung ist die Schicht der Luft/Wasser-Wärmepumpe zwischen einer Außenwand und einer Oberfläche der Luft/Wasser-Wärmepumpe an Streben angeordnet, wobei die Schicht zumindest weitgehend luftdicht an den Streben anliegt.

Gemäß der Erfindung ist die Schicht an wenigstens einer Oberfläche der Streben der Luft/Wasser-Wärmepumpe angeklebt.

In einem vorteilhaften Ausführungsbeispiel ist die Schicht zwischen der wenigstens einen Außenwand und einer Oberfläche um die Luft/Wasser-Wärmepumpe herumgewickelt, insbesondere um die Streben.

Vorteilhaft ist es weiterhin, wenn die Schicht Ausstanzungen oder Ausschnitte aufweist, durch die Gestellteile, Funktionsteile, Anschlussleitungen, Verbindungselemente oder Anschlusskabel durch die Schicht hindurchtreten können.

Eine Luft/Wasser-Wärmepumpe ist vorteilhafterweise so ausgestaltet, dass die folienartige Schicht eine Folie aus Kunststoff oder Metall, Teerpappe, imprägniertem Papier, imprägniertem Stoff, Schaumstoffvlies, Gummi oder ähnlichem flexiblen, luftdichten Material mit einer Dicke von weniger als ca. 3 mm, ca. 1 mm oder insbesondere ca. 0,1 mm ist, insbesondere PE oder PET-Folie.

Gemäß einem Gedanken der Erfindung ist die Schicht aus einer Kunststoff-Schrumpffolie, insbesondere einer Schrumpfhaube gebildet, so dass sich eventuelle Falten oder Übermaße durch Erwärmung beseitigen lassen.

Bei einer Luft/Wasser-Wärmepumpe ist die Schicht teilweise im Bereich von Klebestellen einseitig mit Klebstoff vorbeschichtet, zwischen der Schicht und vorzugsweise einer Strebe ist ein doppelseitiges Klebeband angeklebt oder ein elastisches Fugendichtungsband an der Strebe oder der Schicht angeklebt.

Weiterhin hat es sich als vorteilhaft erwiesen, wenn die Luft/Wasser-Wärmepumpe von der Schicht vollständig oder nahezu vollständig umschlossen ist.

Bei einer Luft/Wasser-Wärmepumpe ist es insbesondere vorteilhaft, dass der Luftweg, bestehend aus dem Raum, dem Luftanschluss, dem Ventilator, einem erstem Wärmeaustauscher vorzugsweise mit einer Abtauwanne, und dem Ausblasraum mit dem Luftanschluss vollständig von einer Schicht umgeben ist.

Gemäß einem weiteren vorteilhaften Gedanken der Erfindung ist auf wenigstens einer Strebe ein elastisches Fugendichtungsband so angebracht, insbesondere angeklebt, dass es an einer Außenwand anliegt.

Überraschenderweise wurde gefunden, dass die Bauweise für eine Luft/Wasser-Wärmepumpe auch für ein Raumluft-unabhängig arbeitendes Brennstoff-Zellen-Heizgerät (BZH) geeignet ist, um eine entsprechende Gasdichtigkeit herzustellen. Brennstoffzellenheizgeräte, welche nicht unter den Schutzbereich der Ansprüche fallen, weisen ebenfalls einen Luftweg auf, durch den Außenluft, oder zumindest vom Ausstellungsraum des BHZ unabhängige Luft zugeführt wird. Weiterhin wird ein Gasstrom, beim Brennstoffzellenheizgerät ist es ein Abgasstrom, aus dem Gerät nach außen geführt. In vorteilhafter Weise weist das Brennstoffzellenheizgerät einen Rahmen aus Streben auf, welche mit einer Folie beklebt sind, und Außenwände, die vor die Folien bzw. Streben gesetzt sind. Hierdurch ist eine entsprechende Gasdichtigkeit zwischen einem Innenraum des Brennstoffzellenheizgerätes und dem das Brennstoffzellenheizgerät umgebenden Raum erreicht.

In den Figuren ist ein entsprechendes Ausführungsbeispiel gezeigt:
- Figur 1 :: Luft/Wasser-Wärmepumpe mit Schicht,

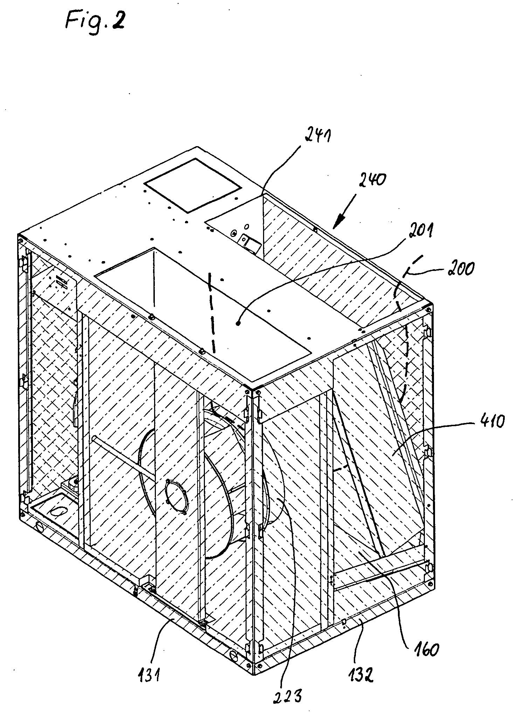

- Figur 2 :: Luft/Wasser-Wärmepumpe mit Schicht,

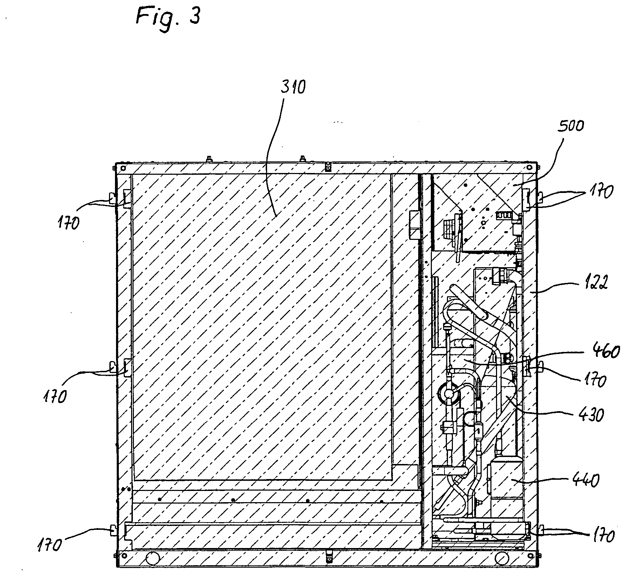

- Figur 3 :: Luft/Wasser-Wärmepumpe mit Schicht,
- Figur 4 :: Schicht mit Ausstanzungen,
- Figur 5 :: Schicht mit Ausstanzungen und Verklebung,
- Figur 6 :: Teilansicht der Abdichtung mit Fugendichtungsband,
- Figur 7 :: Teilansicht der Abdichtung mit Fugendichtungsband,
- Figur 8 :: Wärmepumpe mit einer Schrumpfhaube.

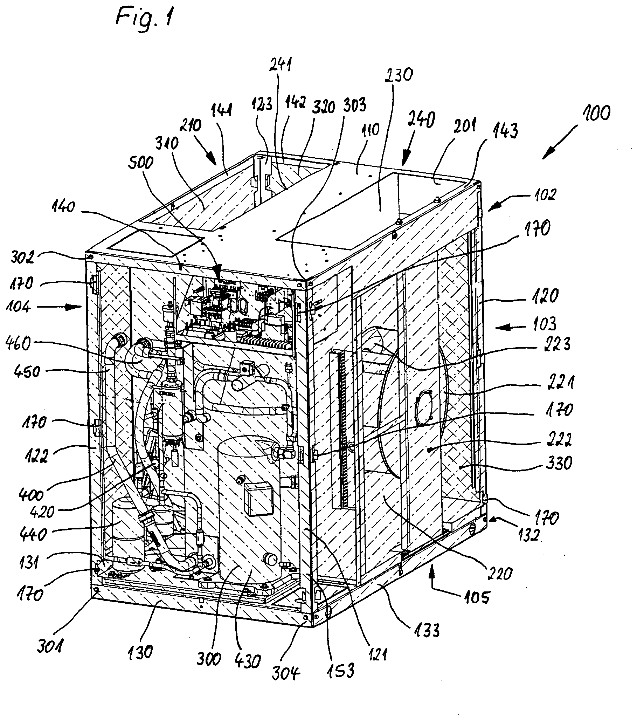

Gemäß Fig. 1 ist eine Luft/Wasser-Wärmepumpe 100 mit Streben 120, 121, 122, 123, 130, 131, 132, 133, 140, 141, 142, und/oder 143 gezeigt. Die Luft/Wasser-Wärmepumpe 100 weist einen inneren Luftweg 200 auf. Der Luftweg beginnt insbesondere mit einer Luftansaugöffnung 210, an die sich wenigstens eine Wand 201 anschließt. In einem Raum 220 ist ein Ventilator 221 angeordnet, im Ausführungsbeispiel ist dieser Ventilator 221 an eine Tragwand 222 befestigt. Der Ventilator 221 ist vor einer Ventilatordüse 223 angeordnet, wodurch Luft in einen Ausblasraum 230 mit einer Fortgasöffnung 240 geblasen wird. Dieser Ausblasraum 230 hat einen Luftanschluss 241.

Die wenigstens eine Strebe 120, 121, 122, 123, 130, 131, 132, 133, 140, 141, 142, und/oder 143 bildet zumindest teilweise einen Rahmen der Luft/Wasser-Wärmepumpe 100. Auf die wenigstens eine Strebe 120, 121, 122, 123, 130, 131, 132, 133, 140, 141, 142, und/oder 143 ist wenigstens eine Schicht 300 mit Ausstanzungen 301, 302, 303, 304 sowie in vorteilhafter Weise mit Bohrungen 305 aufgebracht. Im gezeigten Ausführungsbeispiel gemäß Fig.1 ist je eine Schicht 300, 310, 320, 330 an einer Vorderseite 101, einer Rückseite 102, einer rechten Seite 103 sowie einer linken Seite 104 angebracht. Vorteilhaft ist auch im Boden 105 sowie auf einem Oberteil 110 eine entsprechende Schicht aufgebracht. Die Schicht ist im Oberteil teilweise offen für den Außenluftstrom. Im Ausführungsbeispiel ist der Boden 105 sowie das Oberteil 110 durch andere Maßnahmen abgedichtet, wie z. B. druck-elastischer Kautschuk oder ähnliche Kunststoffmaterialien. Im Deckel 110 und/oder im Boden 105 werden insbesondere Fugendichtungsmaterialien, insbesondere Fugendichtungsbänder, verwendet, Fugen und Öffnungen mit Klebebändern abgeklebt oder mit Silikon oder ähnlichen Spritz-Materialien abgedichtet. Vorteilhaft ist die Verwendung von umschäumten Profilen, so dass die Streben bereits von Schaumstoff oder einem ähnlichen Material umgeben sind.

Ausstanzungen und/oder Bohrungen dienen dazu, um Halteeinrichtungen 170, wie Haken, Schrauben, Niete o.ä., die insbesondere an den Streben ausgebildet sind oder daran befestigt werden, durch die Schicht hindurchzuführen. An die Haltevorrichtungen 170 werden die Verkleidungsteile wie hier im Ausführungsbeispiel die Außenwände 160 161 162 163 164 eingehakt, verschraubt oder anderweitig befestigt. Beim Einhaken entstehen insbesondere Druck- und Scherkräfte zwischen den Außenwänden und der Schicht. Daher ist es vorteilhaft, eine Schicht zu verwenden, die zur Außenwand hin einen möglichst geringen Reibfaktor hat. Besonders vorteilhaft ist es, wenn auf der Schicht noch eine Gleitschicht, insbesondere Teflonschicht aufgebracht ist, die besonders glatt ist, so dass beim Einhaken und Hineinrutschen in die Befestigungshaken kaum Scherkräfte entstehen.

Der Luftweg 200 ist an die Außenluft angeschlossen, einmal durch die Luftansaugöffnung 210 und einmal durch die Fortgasöffnung 240. Im Betrieb der Wärmepumpe entsteht in Strömungsrichtung vor dem Ventilator 221 ein Unterdruck und im Ausblasraum 230 ein Überdruck. Insbesondere durch die unterschiedlichen Druckverhältnisse zwischen dem Inneren des Gebäudes und dem Unterdruck bzw. dem Überdruck in der Wärmepumpe wird durch die an die Streben angeklebten Schichten ein Luftaustausch zwischen Außenluft und Innenluft vermieden. Aber auch, wenn die Wärmepumpe nicht im Betrieb ist, d.h. z.B. dass der Ventilator 221 steht, können z.B. durch Winddruck Druck-Unterschiede zwischen dem Inneren des Gebäudes und der Außenluft bestehen. Durch die Gasabdichtung mit den Schichten ist ein Luftaustausch auch in diesem Falle zwischen Außenluft und Innenluft vermieden.

Der im Luftweg 200 angeordnete erste Wärmeaustauscher 410 ist im Heizbetrieb ein Verdampfer. Bei Luft/Wasser-Wärmepumpen 100, die auch kühlen können, ist der erste Wärmetauscher 410 im Kühlbetrieb ein Verflüssiger. Die erste Wärmetauscher 410 ist in einen Kältemittelkreislauf 400 eingebunden, der weiterhin einen Verdichter 430, Kältemittelleitungen 450, Filtertrockner 440, ein Expansionsventil 420, sowie einen zweiten Wärmetauscher 460 aufweist. Im Heizbetrieb ist der zweite Wärmeaustauscher 460 ein Verflüssiger und im Kühlbetrieb der Luft/Wasser-Wärmepumpe 100 ein Verdampfer. Weiterhin weist die Luft/Wasser-Wärmepumpe 100 einen Schaltraum 500 auf.

Im Ausführungsbeispiel bestehen die Schichten 300, 310, 320, 330, die mit einer schrägen Strich-Punkt-Linie dargestellt sind, aus einer transparenten PET-Folie (daher in den Figuren teilweise mit einer Strich-Kurzstrich-Linie dargestellt) mit einer Dicke von weniger als 3 mm, insbesondere ca. 0,1 mm. Dies hat den Vorteil, dass die Luft/Wasser-Wärmepumpe 100 bei Abnahme einer oder mehrerer Außenwände 160, 161, 162,163 einzusehen ist, insbesondere der Kältemittelkreislauf 400 sowie die Luftweg 200 sind zumindest zum Teil einzusehen.

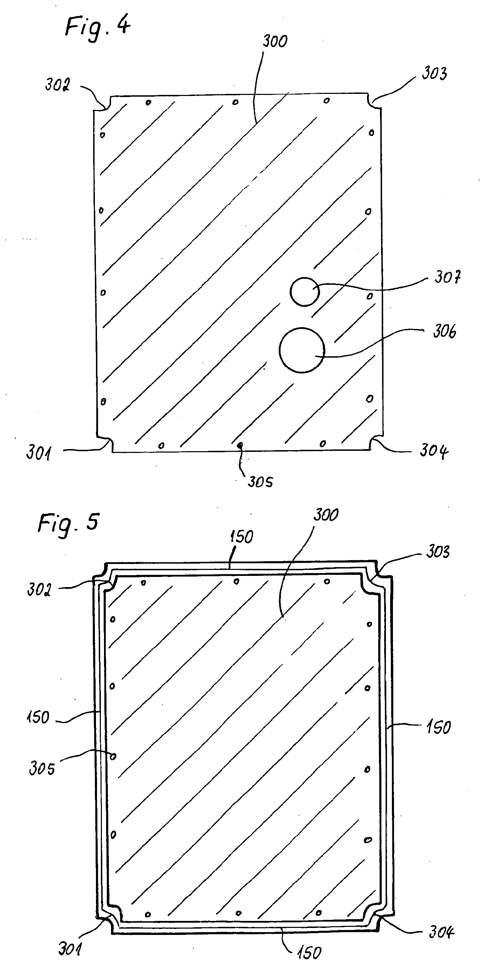

In Fig. 4 ist eine Schicht 300, insbesondere aus einer transparenten PET-Folie mit einer Dicke von weniger als 3 mm, ca. 1 mm oder insbesondere 0,1 mm mit Ausstanzungen sowie Bohrungen 305 gezeigt. Weiterhin sind zwei Öffnungen 306, 307 angebracht, durch die insbesondere Anschlussleitungen der Hydraulik sowie für die Stromversorgung oder andere Leitungen durchgeführt sind.

Fig. 5 zeigt ebenfalls eine Schicht 300 mit Ausstanzungen 301 und Bohrungen 305 sowie zusätzlich mit einer bereits aufgebrachten Klebschicht 150, insbesondere beispielsweise ein doppelseitiges Klebeband, oder mit einer Klebefolie.

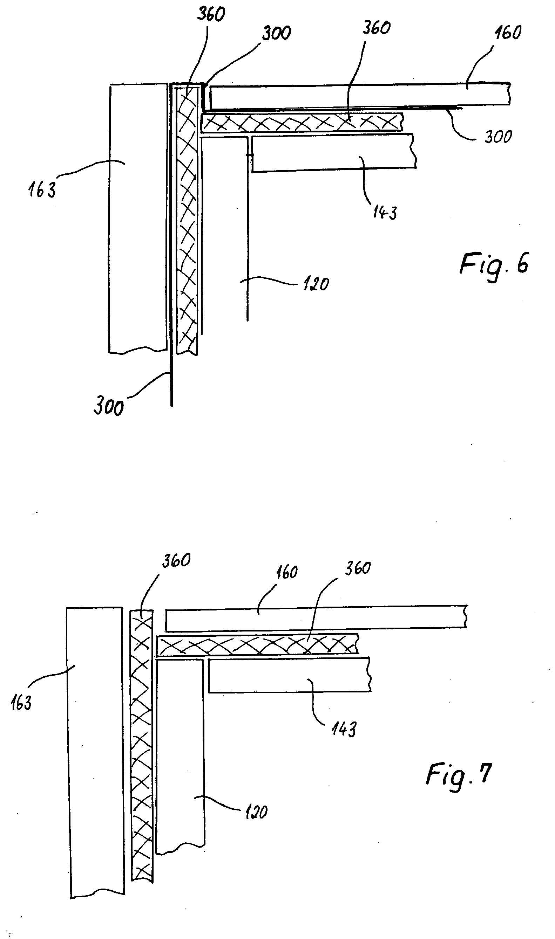

Fig. 6 zeigt die Verwendung wenigstens eines Fugendichtungsbands 360, welches zwischen einer Strebe 120 und/oder 143 und der Schicht 300 angeordnet ist. Das Fugendichtungsband 360 ist vorzugsweise zumindest an der Strebe120 und/oder 143 und/oder der Schicht 300 angeklebt. Eine Außenwand 160 und/oder 163 befindet sich vor der Schicht.

In einem weiteren Ausführungsbeispiel gemäß Fig. 7 ist ein Fugendichtungsband 360 zwischen der Strebe 120 und/oder 143 und der Außenwand 160 und/oder 163 angebracht. In vorteilhafter Weise weist das Fugendichtungsband auf einer Seite eine Klebschicht und auf einer zweiten Seite eine Gleitschicht oder zumindest eine Schicht mit einem verminderten Reibfaktor auf, damit die Außenwand 160 und/oder 163 an die Strebe 120 und/oder 143 eingehängt werden kann. Die Verwendung des Fugendichtungsbandes wird in vorteilhafter Weise zumindest an einer Anzahl von mehreren Streben 120, 121, 122, 123, 130, 131, 132, 133, 140, 141, 142, und/oder 143 oder auch komplett gegenüber mehreren oder allen Außenwänden 160, 161, 162, 163 oder 164 verwendet.

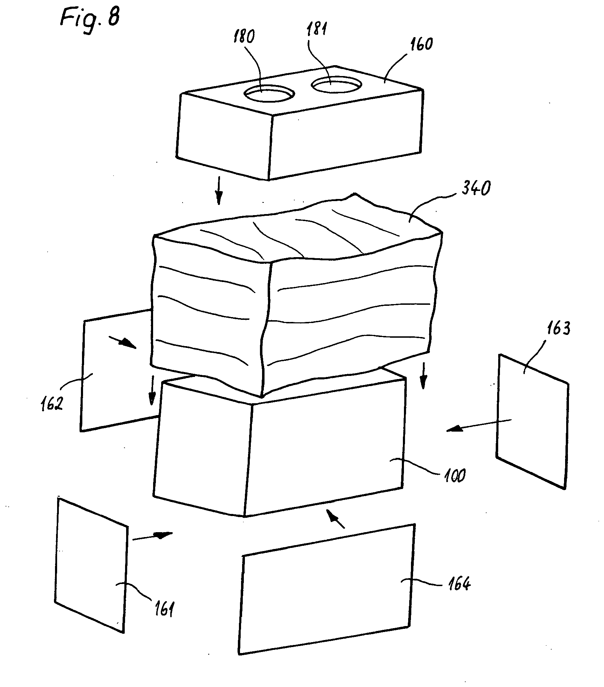

Fig. 8 zeigt den prinzipiellen Aufbau bei Verwendung einer Schrumpfhaube, die über die Luft/Wasser-Wärmepumpe 100 gebracht wird. Durch Erhitzen zieht sich die Schrumpfhaube zusammen und umschließt die Luft/Wasser-Wärmepumpe luftdicht.

Die Außenwände 160, 161, 162, 163, 164 werden dann, wenn die Schrumpfhaube über die Wärmepumpe gebracht ist, an der Luft/Wasser-Wärmepumpe befestigt, insbesondere eingehakt. Die Außenwand 160 weist eine innere nicht weiter dargestellte Luftführung für Zuluft und Fortgas mit entsprechenden Öffnungen 180, 181 auf. Bei der Luft/Wasser-Wärmepumpe und einem Lüftungsgerät ist das Fortgas Luft. Die Außenwand 160 bildet somit nicht nur eine einfache Wand sondern einen Funktionsteil mit einer inneren Luftführung.

## Patentansprüche

1. Luft/Wasser-Wärmepumpe (100) für die Aufstellung in einem Gebäude, in der ein zumindest teilweise durch eine Wand (201) gebildeter Luftweg (200) von einer Luftansaugöffnung (210) zu einer Fortgasöffnung (240) führt, mit
einer Vorderseite (101), einer Rückseite (102), einer rechten Seite (103) sowie einer linken Seite (104), die jeweils eine Außenwand (161, 162, 163, 164) aufweisen,
einem Boden (105) und einem Oberteil (110),
einem im Luftweg (200) befindlichen Raum (220), in dem ein Ventilator (221) angeordnet ist, der Luft zu einem Wärmetauscher fördert,
**gekennzeichnet durch** dünne, flexible und luftdichte, folienartige Schichten (300) und Streben, die einen Rahmen der Luft/Wasser-Wärmepumpe bilden,
wobei die Schichten (300) zwischen den Außenwänden (161, 162, 163, 164) und den Oberflächen der Streben angeordnet sind und die Schichten (300) weitgehend luftdicht an den Oberflächen anliegen , wodurch die Luft/Wasserwärmepumpe (100) weitgehend luftdicht zum Gebäude ist.

2. Luft/Wasser-Wärmepumpe (100) nach Anspruch 1,
**dadurch gekennzeichnet,**
**dass** die Schichten (300) an der Oberfläche der Streben angeklebt sind.

3. Luft/Wasser-Wärmepumpe (100) nach einem der vorhergehenden Ansprüche,
**dadurch gekennzeichnet,**
**dass** die Schichten (300) um die Streben (120, 121) der Wärmepumpe herumgewickelt sind.

4. Luft/Wasser-Wärmepumpe (100) nach einem der vorhergehenden Ansprüche,
**dadurch gekennzeichnet,**
**dass** die Schichten (300) wenigstens eine Ausstanzung (301, 302, 303, 304) oder Ausschnitte aufweisen, durch die Gestellteile, Funktionsteile, Anschlussleitungen, Verbindungselemente oder Anschlusskabel durch die Schichten (300) hindurchtreten.

5. Luft/Wasser-Wärmepumpe (100) nach einem der vorhergehenden Ansprüche, **dadurch gekennzeichnet,**
**dass** die Schichten (300) eine Folie aus Kunststoff oder Metall, Teerpappe, imprägniertem Papier, imprägniertem Stoff, Schaumstoffvlies, Gummi oder ähnlichem flexiblen luftdichten Material, mit einer Dicke von weniger als ca. 3 mm, ca. 1 mm oder insbesondere ca. 0,1 mm sind und insbesondere aus PE oder PET-Folie bestehen.

6. Luft/Wasser-Wärmepumpe (100) nach einem der vorhergehenden Ansprüche,
**dadurch gekennzeichnet,**
**dass** die Schichten (300, 310, 320, 330) aus einer Kunststoff-Schrumpffolie, insbesondere einer Schrumpfhaube (340) gebildet sind, so dass sich eventuelle Falten oder Übermaße durch Erwärmung beseitigen lassen.

7. Luft/Wasser-Wärmepumpe (100) nach einem der vorhergehenden Ansprüche,
**dadurch gekennzeichnet,**
**dass** die Schichten (300) im Bereich von Klebestellen einseitig mit Klebstoff vorbeschichtet sind, zwischen der Schicht und der Oberfläche der Strebe ein doppelseitiges Klebeband angeklebt ist oder ein elastisches Fugendichtungsband (360) an der Strebe (120) oder der Schicht (300) angeklebt ist.

8. Luft/Wasser-Wärmepumpe (100) nach einem der vorhergehenden Ansprüche,
**dadurch gekennzeichnet,**
**dass** die Wärmepumpe (100) von den Schichten (300) nahezu vollständig, insbesondere bis auf den Boden (105), oder vollständig umschlossen ist und die Luftansaugöffnung (210) und die Fortgasöffnung (240) frei sind.

9. Luft/Wasser-Wärmepumpe (100) nach einem der vorhergehenden Ansprüche,
**dadurch gekennzeichnet,**
**dass** der Luftweg (200), bestehend aus dem Raum (220), einem erstem Wärmeaustauscher (410) mit einer Abtauwanne (190) und dem Ventilator (221), vollständig von einer Schicht (300) umgeben ist, wobei die Luftansaugöffnung (210) und die Fortgasöffnung (240) offen zur Außenluft sind.

10. Luft/Wasser-Wärmepumpe (100) nach einem der vorhergehenden Ansprüche, **dadurch gekennzeichnet,**
**dass** auf wenigstens einer Strebe ein elastisches Fugendichtungsband (360) mit einer Klebschicht und einer Oberfläche mit einem verminderten Reibwert angebracht ist, an dem eine Außenwand anliegt.

## Claims

1. Air/water heat pump (100) to be positioned in a building in which an air path (200) formed at least partly by a wall (201) leads from an air intake opening (210) to an exhaust gas opening (240) with
a front side (101), a rear side (102), a right side (103) and a left side (104), each of which comprising an outer wall (161, 162, 163, 164),
a bottom (105) and a top (110),
a chamber (220) located in the air path (200), which contains a fan (221) that conveys air to a heat exchanger,
**characterised in that** it has thin, flexible and airtight, film-like layers (300) and
struts that form a frame of the air/water heat pump,
where the layers (300) are arranged between the outer walls (161, 162, 163, 164) and the surfaces of the struts, and the layers (300) lie flat against the surfaces in a broadly airtight manner, which means that the air/water heat pump (100) is broadly airtight from the building.

2. The air/water heat pump (100) according to claim 1,
**characterised in that**
the layers (300) are stuck to the surface of the struts.

3. The air/water heat pump (100) according to one of the preceding claims,
**characterised in that**
the layers (300) are wrapped around the struts (120, 121) of the heat pump.

4. The air/water heat pump (100) according to one of the preceding claims,
**characterised in that**
the layers (300) comprise at least one knock-out (301, 302, 303, 304) or cut-outs through which the parts of the frame, functional parts, connection lines, connecting elements or connecting cables pass through the layers (300).

5. The air/water heat pump (100) according to one of the preceding claims,
**characterised in that**
the layers (300) consist of a sheet of plastic or metal, tar paper, impregnated paper, impregnated fabric, foam fleece, rubber or similar flexible airtight material, with a thickness of less than approximately 3 mm, approximately 1 mm or, in particular, approximately 0.1 mm and consisting, in particular, of PE or PET film.

6. The air/water heat pump (100) according to one of the preceding claims,
**characterised in that**
the layers (300, 310, 320, 330) are formed of a plastic shrink film, and in particular a shrink hood (340), so that any creases or excess dimensions can be removed by heating.

7. The air/water heat pump (100) according to one of the preceding claims,
**characterised in that**
the layers (300) are pre-coated with adhesive on one side at bonding points, double-sided adhesive tape is attached between the layer and the surface of the strut or an elastic joint-sealing tape (360) is attached to the strut (120) or the layer (300).

8. The air/water heat pump (100) according to one of the preceding claims,
**characterised in that**
the heat pump (100) is completely or almost completely enclosed by the layers (300), in particular down to the bottom (105), and the air intake opening (210) and the exhaust gas opening (240) are clear.

9. The air/water heat pump (100) according to one of the preceding claims,
**characterised in that**
the air path (200), comprising the chamber (220), a first heat exchanger (410) with a defrost pan (190) and a fan (221), is completely surrounded by a layer (300), where the air intake opening (210) and the exhaust gas opening (240) are open to the outside air.

10. The air/water heat pump (100) according to one of the preceding claims,
**characterised in that**,
next to an outer wall, an elastic joint-sealing tape (360) with a layer of adhesive and a surface with a reduced friction coefficient is attached on at least on one strut.

## Revendications

1. Pompe à chaleur air-eau (100) destinée à être installée dans un bâtiment, dans laquelle une voie d'air (200) formée au moins en partie à travers une paroi (201) s'étend d'une ouverture d'aspiration d'air (210) à une ouverture de gaz d'échappement (240), comportant :
une face avant (101), une face arrière (102), un côté droit (103) et un côté gauche (104), qui présentent respectivement une paroi extérieure (161, 162, 163, 164),
un fond (105) et une partie supérieure (110),
un espace (220) situé dans la voie d'air (200) et dans lequel est disposé un ventilateur (221) qui transporte de l'air vers un échangeur de chaleur ;
**caractérisée par** des couches (300) minces, flexibles et étanches à l'air de type film, et des montants qui forment un cadre de la pompe à chaleur air-eau,
lesdites couches (300) étant disposées entre les parois extérieures (161, 162, 163, 164) et les surfaces des montants et lesdites couches (300) étant appliquées sur les surfaces en grande partie de manière étanche à l'air, moyennant quoi la pompe à chaleur air-eau (100) est en grande partie étanche à l'air par rapport au bâtiment.

2. Pompe à chaleur air-eau (100) selon la revendication 1,
**caractérisée en ce que**
les couches (300) sont collées sur la surface des montants.

3. Pompe à chaleur air-eau (100) selon l'une quelconque des revendications précédentes,
**caractérisée en ce que**
les couches (300) sont enroulées autour des montants (120, 121) de la pompe à chaleur.

4. Pompe à chaleur air-eau (100) selon l'une quelconque des revendications précédentes,
**caractérisée en ce que**
les couches (300) présentent au moins une ouverture poinçonnée (301, 302, 303, 304) ou des découpes, par lesquelles des parties de support, des parties fonctionnelles, des conduites de raccordement, des éléments de jonction ou des câbles de raccordement traversent les couches (300).

5. Pompe à chaleur air-eau (100) selon l'une quelconque des revendications précédentes,
**caractérisée en ce que**
les couches (300) sont un film en matière synthétique ou en métal, en carton goudronné, en papier imprégné, en étoffe imprégnée, en non-tissé à base de mousse, en caoutchouc ou en un matériau flexible et étanche à l'air similaire, d'une épaisseur inférieure à environ 3 mm, environ 1 mm ou en particulier environ 0,1 mm et sont en particulier constituées de PE ou de film de PET.

6. Pompe à chaleur air-eau (100) selon l'une quelconque des revendications précédentes,
**caractérisée en ce que**
les couches (300, 310, 320, 330) sont formées à partir d'un film rétractable en matière synthétique, en particulier une housse rétractable (340), de telle sorte que des plis ou des excédents de matière éventuels peuvent être éliminés par chauffage.

7. Pompe à chaleur air-eau (100) selon l'une quelconque des revendications précédentes,
**caractérisée en ce que**
les couches (300) sont préenduites de colle sur un côté dans des zones de collage, un ruban adhésif double-face est collé entre la couche et la surface du montant ou un ruban pour joints (360) élastique est collé sur le montant (120) ou la couche (300).

8. Pompe à chaleur air-eau (100) selon l'une quelconque des revendications précédentes,
**caractérisée en ce que**
la pompe à chaleur (100) est entourée presque entièrement, en particulier à l'exception du fond (105), ou entièrement par les couches (300) et l'ouverture d'aspiration d'air (210) et l'ouverture de gaz d'échappement (240) sont dégagées.

9. Pompe à chaleur air-eau (100) selon l'une quelconque des revendications précédentes,
**caractérisée en ce que**
la voie d'air (200), constituée de l'espace (220), d'un premier échangeur de chaleur (410) avec un bac de dégivrage (190) et du ventilateur (221), est entièrement entourée d'une couche (300), l'ouverture d'aspiration d'air (210) et l'ouverture de gaz d'échappement (240) étant ouvertes sur l'air extérieur.

10. Pompe à chaleur air-eau (100) selon l'une quelconque des revendications précédentes,
**caractérisée en ce que**
un ruban pour joints (360) élastique avec une couche adhésive et une surface dotée d'un coefficient de frottement réduit est appliqué sur au moins un montant, une paroi extérieure étant appliquée sur ledit ruban pour joints.
